# EUROPEAN PATENT SPECIFICATION

(11) **EP 4 019 140 B1**
(45) Date of publication and mention of the grant of the patent: **06.05.2026**
(21) Application number: 20216703.7
(22) Date of filing: 22.12.2020
(51) Int. Cl.: B02C 23/02

(54) **POWDER PROCESSING APPARATUS INCLUDING A LOADING AND UNLOADING SYSTEM**
PULVERVERARBEITUNGSVORRICHTUNG MIT EINEM BE- UND ENTLADESYSTEM
APPAREIL DE TRAITEMENT DE POUDRE COMPRENANT UN SYSTÈME DE CHARGEMENT ET DE DÉCHARGEMENT

(43) Date of publication of application: 29.06.2022
(73) Proprietor: Frewitt fabrique de machines S.A., 1763 Granges-Paccot (CH)
(72) Inventor: Grossrieder, Yves, 1773 Russy (CH); Virdis, Antoine, 1724 Ferpicloz (CH)
(74) Representative: P&TS SA (AG, Ltd.)

(56) References cited:
- WO-A1-2016/098017
- CN-U- 206 139 267

## Description

### Technical domain

The present invention concerns a powder processing apparatus for performing a powder processing operation that includes a loading and unloading system and allows for simplified loading of the material to be processed and unloading of the processed material. The present invention further concerns a method of using the powder processing apparatus and a computer program comprising instructions for implementing the method.

### Related art

According to existing solutions, the problem of lifting a drum or any container to fill a powder processing apparatus with a material to be processed is solved by using an auxiliary lifting device such as a lifting column. The drum is then clamped to the lifting device, raised up and maintained over the powder processing apparatus. After opening a valve, such as a butterfly valve, the material to be milled can then be poured into the powder processing apparatus.

Such an operation is both time and space consuming as it requires to bring an auxiliary cumbersome lifting device. Moreover, the docking of the drum against the powder processing apparatus is particularly delicate as the involved weights can be rather important. Therefore, this operation often requires one person commanding the lifting device and another one controlling the docking of the drum against the powder processing apparatus.

CN206139267U relates to a reducing mechanism for carrying out crushing operation the mechanism including a shredder head which can remove ground and is fixed to a driver element, a pulverizing chamber, a rotor assembly which is mounted to the pulverizing chamber and a screen assembly which is used to sieve the crushed material; wherein the driver element is adapted to control the rotor assembly during the crushing operation relative to the sieve motion.

WO2016098017 relates to a modular system for performing a plurality of crushing and grinding processes, comprising: a plurality of interchangeable milling heads, each interchangeable milling head comprising a milling mechanism configured to perform one of said plurality of crushing and grinding processes when driven; a driving unit comprising a driving motor having a range of motor characteristics; and a connecting unit configured to functionally connect one of the interchangeable milling heads to the driving motor such that, when connected, said one of the plurality of interchangeable milling heads can perform said one of said plurality of crushing and grinding processes; each of said plurality of interchangeable milling heads further comprises an adaptor unit configured to connect the milling head to the connecting unit and for converting the range of motor characteristics of the driving motor into the milling driving characteristics of the connected interchangeable milling heads

### Summary

The present invention concerns a powder processing apparatus comprising a processing head configured to process a material and to be removably and functionally fixed to a driving unit via a fixation device extending between the driving unit and the processing head, the processing head being at a distance from a base when connected to the driving unit. The processing head comprises an inlet connecting unit configured to be connected to an input container containing the material to be processed and an outlet connecting unit configured to be connected to an output container destined to receive the processed material. The fixation device comprises a pivoting element configured to rotate the processing head around a pivoting axis by a rotation angle between a first angular position where the material contained in the input container can be inputted in a processing head and where the processed material can be outputted in the output container, and a second angular position where the input container being on the base can be connected to the inlet connecting unit.

The present invention further concerns a method of using the powder processing apparatus and comprising the steps of
pivoting the processing head in the second angular position;
connecting an input container to the inlet connecting unit;
pivoting the processing head with the attached input container in the first angular position;
connecting an output container to the outlet connecting unit; and
performing the powder processing operation.

A computer program comprising instructions for implementing the method is also disclosed.

The powder processing apparatus disclosed herein allows for loading the material to be processed in the processing head and unloading the processed material from the processing head without using an auxiliary device such as a separate lifting column and/or clamping elements. The surface area needed to load and use the powder processing apparatus can be reduced. The complexity of the manipulation steps required in loading and operating the powder processing apparatus is also reduced. In particular, the steps of lifting and attaching the containers to the processing head can be performed by a single person instead of two in the existing solutions. Careful centring of the container is also not needed.

Moreover, the powder processing apparatus disclosed herein allows for using containers that do not include a discharge valve to prevent the material from emptying when the container is turned over.

### Short description of the drawings

Exemplar embodiments of the invention are disclosed in the description and illustrated by the drawings in which:
Fig. 1 illustrates schematically a powder processing apparatus comprising a processing head and a driving unit, according to an embodiment;
Fig. 2 shows an isolated view of an example of a processing head, according to an embodiment;
Figs. 3a to 3c illustrate a method of using the powder processing apparatus including the steps of pivoting the processing head in a second angular position (Fig. 3a), pivoting the processing head with an attached input container in a first angular position (Fig. 3b), and transferring the processed material from the processing head to an output container (Fig. 3c);
Fig. 4 shows the powder processing apparatus comprising a connecting device, according to an embodiment; and
Fig. 5 illustrates the powder processing apparatus comprising a container supporting device, according to an embodiment.

### Examples of embodiments

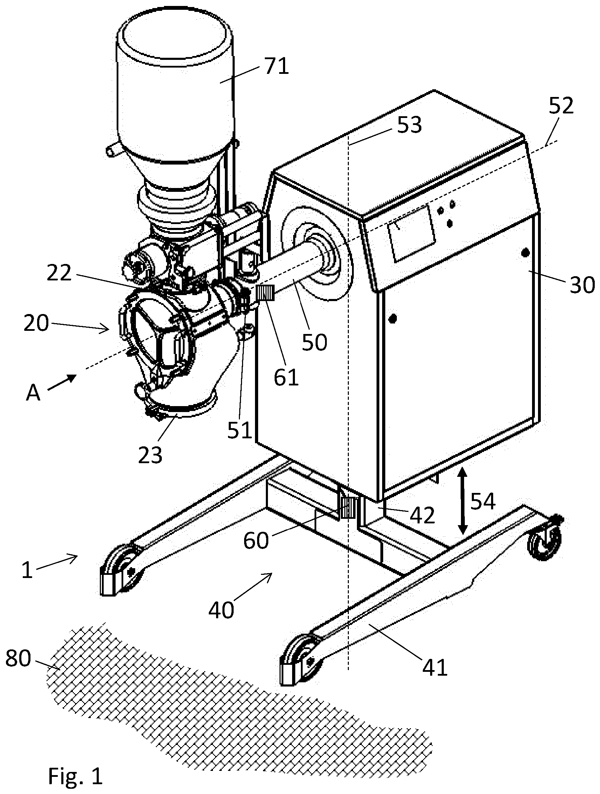

**Fig. 1** illustrates a powder processing apparatus 1 according to an embodiment. The powder processing apparatus 1 comprises a processing head 20 configured to process a material (powder or bulk material to be reduced to powder). The processing head 20 is configured to be removably and functionally fixed to a driving unit 30 via a fixation device 50 extending between the driving unit 30 and the processing head 20. In the example of Fig.1, the fixation device 50 is configured as an arm extending between the driving unit 30 and the processing head 20. When connected to the driving unit 30, the processing head 20 is at a distance from a base 80. For example, the processing head 20 bis above the ground 80 on which lay the powder processing apparatus 1.

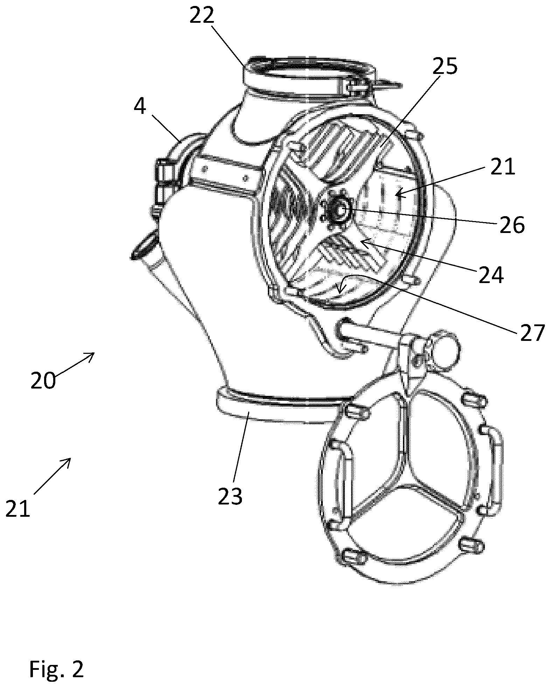

**Fig. 2** shows an isolated view of the processing head 20 comprising a milling head, according to an exemplary configuration. As illustrated, the milling head 20 can comprise a milling chamber 21 including a rotor assembly 24 rotationally mounted around a rotor axis 26 and a sieve assembly 27. In the example of Fig. 2, the sieve assembly 27 has a cylindrical shape that can be arranged coaxial with the rotor axis 26 in the milling chamber 21. The rotor assembly 26 can include one or a plurality of blades 25, for example extending radially from the rotor axis 26. The rotor assembly 24 is drivingly connected to the driving unit 30 when the milling head 20 is functionally fixed to the driving unit 30. The processing head 20 is not limited to the exemplary milling head shown in Fig. 2. Indeed, the processing head 20 can comprise any type of processing head configured to perform a powder processing operation such any type of milling, powder size reduction, de-agglomeration, pulverizing, homogenizing, sizing, crushing, conveying, powder handling, dosing, mixing, etc.

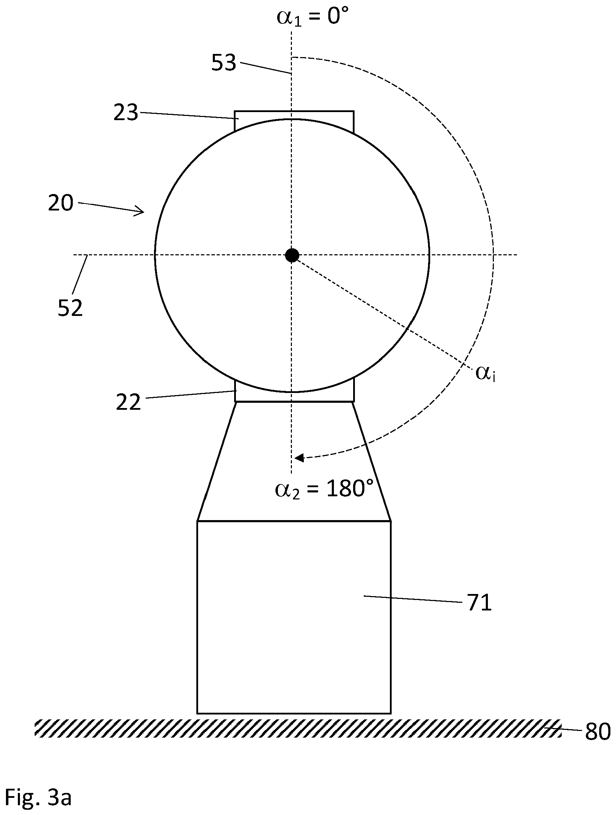

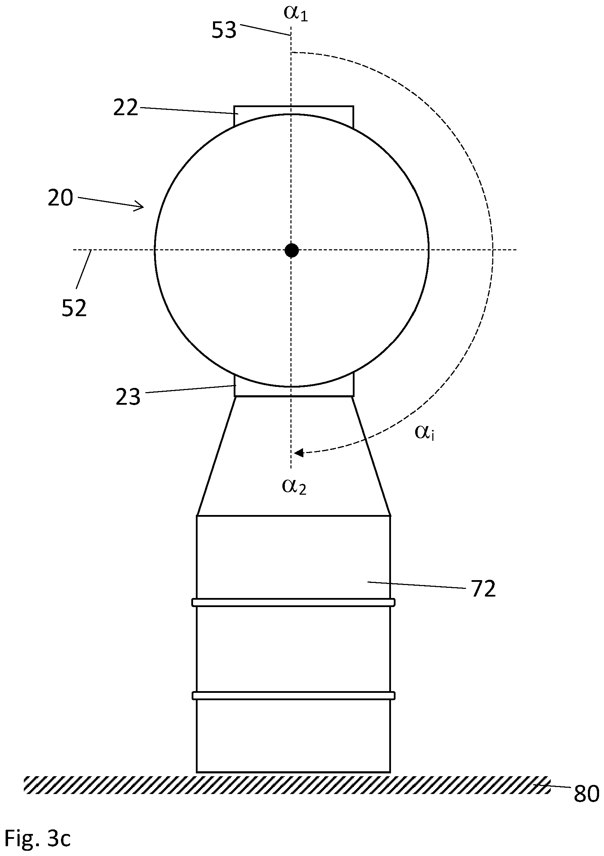

In one aspect, the processing head 20 comprises an inlet connecting unit 22 configured to be connected to an input container 71 (see Fig. 3a) containing the material to be processed. The processing head 20 further comprises an outlet connecting unit 23, configured to be connected to an output container 72 (see Fig. 3c) destined to receive the processed material. The inlet and outlet connecting units 22, 23 may comprise a barrel, industrial bag, a funnel, a sleeve, or any other suitable container or accessory.

In a non-limiting example, the inlet and/or outlet connecting units 22, 23 comprise a tri-clamp connection.

In one aspect, the fixation device 50 comprises a pivoting element 51 configured to rotate the processing head 2 by a rotation angle αᵢ around a pivoting axis 52 substantially coaxial with the fixation device 50. In particular, the pivoting element 51 is configured to rotate the processing head 2 around the pivoting axis 52 by between a first angular position α₁ (see Figs. 3a to 3c) where the material contained in the input container can be inputted in the processing head 20 and where the processed material can be outputted in the output container (during and/or after the powder processing operation), and a second angular position α₂ where the input container being on the base 80 (for example on the ground) can be connected to the inlet connecting unit 22 (prior to the powder processing operation).

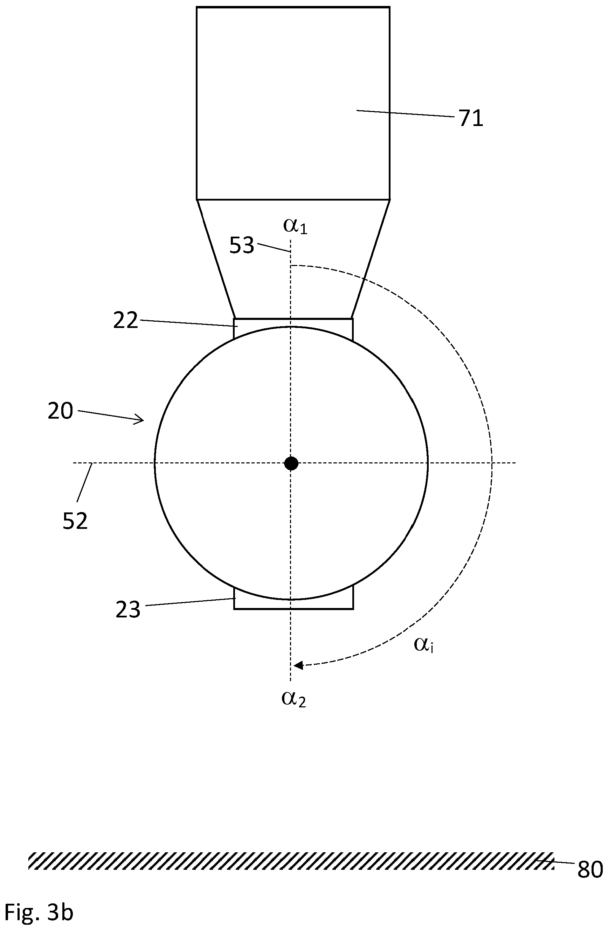

According to an embodiment, a method of using the powder processing apparatus 1 is represented in **Figs. 3a** to **3c****.** More particularly, Figs. 3a to 3c illustrate a schematic front view (viewed from A in Fig. 1) of the processing head 20 showing the first and second angular position α₁, α₂. The method comprises the steps of:
pivoting the processing head 20 in the second angular position α₂ (Fig. 3a);
connecting an input container 71 (being on the base 80) to the inlet connecting unit 22;
pivoting the processing head 20 with the attached input container 71 in the first angular position α₁ (Fig. 3b);
connecting an output container 72 (being on the base 80) to the outlet connecting unit 23; (Fig. 3c); and
performing the powder processing operation.

During the step of performing the powder processing operation, the processed material can be transferred from the processing head 20 to the output container 72. Transferring the processed material can be performed simultaneously or sequentially with the step of performing the powder processing operation. In the case where the processing head 20 is a milling head such as illustrated in Fig. 2, the driving unit 30 can rotate the rotor assembly 24 relative to the sieve assembly 27 such as to mill the material contained in the milling chamber 21.

Transferring the material to be processed from the input container 71 to the processing head 20 and transferring the processed material from the processing head 20 to the output container 72 can be performed by gravity or by suitable means, possibly including a dosing unit, a valve unit or a gas flow under over or under pressure.

In some aspects, the step of connecting an output container 72 to the outlet connecting unit 23 can be performed prior to performing the powder processing operation. The step of connecting an output container 72 to the outlet connecting unit 23 can further be performed prior to the step of pivoting the processing head 20 in the second angular position α₂. In the latter case, the output container 72 can be connected to the processing head 20 prior to connecting the input container 71. The input container 71 can be filled with a material to be processed prior to being connected to the processing head 20.

When the processing head 20 is pivoted in the second angular position α₂, the input container 71 can be arranged to be facing the inlet connecting unit 22 such that it can be connected to the latter. Similarly, the output container 72 can be arranged to be facing the outlet connecting unit 23.

In a preferred configuration, the rotation angle αᵢ is at least 160° or at least 180°. For example, the first and second angular positions α₁, α₂ can correspond to the processing head 20 being oriented substantially along a vertical direction 53 substantially perpendicular to the pivoting axis 52 (see Fig. 3a), such that the processing head 20 is in a position to perform the powder processing operation (first angular positions α₁ = 0°), or aligned with the input container 71 to be attached (second angular positions α₂ = 180°). Other angular positions can be contemplated. For example, the first and second angular positions α₁, α₂ can correspond to an angle whereby the processing head 20 is inclined relative to the vertical direction 53.

The processing head 20 is pivoted by the pivoting element 51. Pivoting the processing head 20 can be performed manually. Alternatively, the rotation of the processing head 20 can be driven by using a head driving unit independent of the driving unit 30.

In one aspect, the inlet connecting unit 22 and/or the outlet connecting unit 23 can comprise locking connection, such as a tri-clamp connection, allowing to connect the input and/or output container 71, 72 in a secured fashion. Other configurations of the inlet and outlet connecting units 22, 23 can however be contemplated.

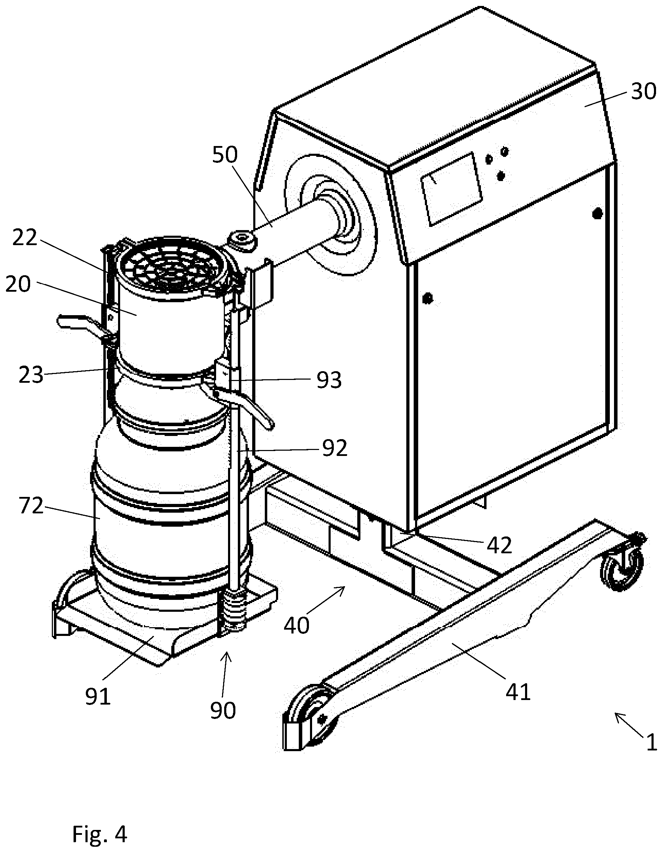

**Fig. 4** shows the powder processing apparatus 1 according to another embodiment. The powder processing apparatus 1 comprises a connecting device 90 configured to connect the input container 71 to the inlet connecting unit 22 and/or the output container 72 to the outlet connecting unit 23 in a secured fashion without requiring a locking connection. In the exemplary embodiment of Fig. 4, the connecting device 90 comprises a connecting plate 91 is configured to receive the input and/or output container 71, 72. The connecting plate 91 cooperates with a spring-loaded shaft 92 (two spring-loaded shafts in Fig. 4) such as to press the input and/or output container 71, 72 against the inlet and/or outlet connecting unit 22, 23 respectively. The spring-loaded shaft 92 can be arranged slidingly in a bushing 93 fixed relative to the processing head 20.

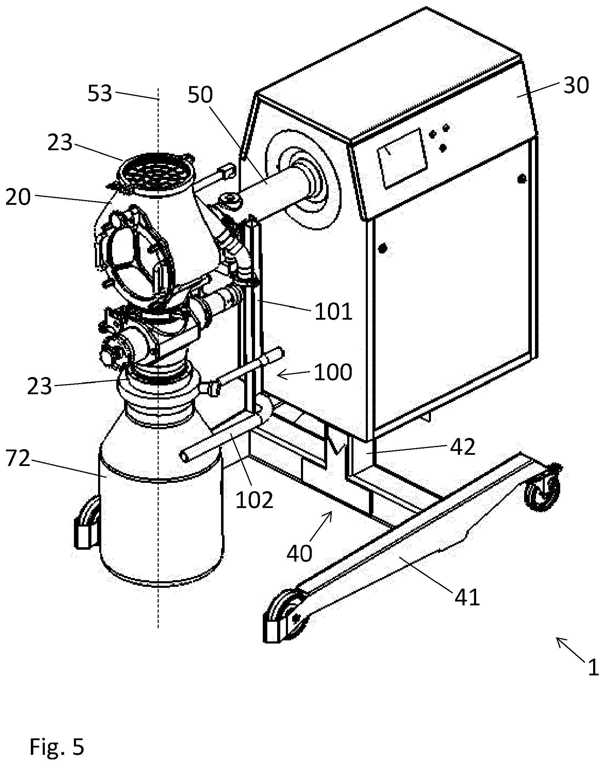

In another aspect shown in **Fig. 5****,** the powder processing apparatus 1 comprises a container supporting device 100 configured to support the input and/or output container 71, 72 relative to the vertical direction 53. The container supporting device 100 allows for resisting lateral loads acting on the input and/or output container 71, 72 connected to the processing head 20. In the exemplary embodiment of Fig. 5, the container supporting device 100 comprises a column 101 fixed to the fixation device 50 and a supporting arm 102 fixed to the column 101. The container supporting device 100 can comprise two or more supporting arms 102. The single or plurality of supporting arms 102 support the input and/or output container 71, 72 relative to the vertical direction 53 (support the input and/or output container 71, 72 laterally relative to the processing head 20) when the latter is connected to the processing head 20.

In an embodiment, the powder processing apparatus 1 can comprise an optional supporting structure 40 (see Fig. 1) supporting the driving unit 30 above the base 80 (or ground). The supporting structure 40 can being configured to move the driving unit 30 substantially along the vertical direction 53.

In one aspect, the supporting structure 40 can comprise a lifting column 42 configured to control the movement of the driving unit 30 up and down along the vertical direction 53 (shown by the double arrow 54 in Fig. 1) to a predetermined position. The lifting column 42 can comprise a linear actuator (not shown) or any other actuator device suitable to control the movement of the driving unit 30 along the vertical direction 53. The linear actuator may refer to an electric, pneumatic, hydraulic, electro-hydraulic or mechanical device that generates the movement 54 along the vertical direction 53. The supporting structure can further comprise a supporting base 41 supporting the lifting column 42.

The lifting column 42 can be used to adjust the distance between the input container 71 and the inlet connecting unit 21 when the input container 71 is on the base 80 and when the processing head is in the second angular position α₂. The lifting column 42 can be further used to adjust the distance between the output container 72 and the outlet connecting unit 23 when the output container 72 is on the base 80 and when the processing head is in the first angular position α₁. For example, the lifting column 42 can move the driving unit 30 and the processing head 20 turned in the second angular position α₂ down towards the input container 71 to attach the latter to the processing head 20. After attaching the input container 71 to the processing head 20, the lifting column 42 can move the driving unit 30 upwards prior to turning the processing head 20 (with the input container 71 attached) in the first angular position α₁.

The lifting column 42 can be controlled manually or in an automated fashion such as by using a pneumatic or electric actuator.

In an embodiment, the lifting column 42 comprises a lifting sensor 60 (see Fig. 1) configured to provide a linear position signal associated with the movement 54 of the lifting column 42. The lifting sensor 60 may comprise position sensor, for example located in the processing head 20 or in the lifting column 42. The lifting sensor 60 may further comprise a displacement transducer that is adapted to measure the extension of the lifting column 42 and to transmit the linear position signal indicative of the extension of the lifting column 42. The lifting sensor 60 may further comprise an elevation sensor that is adapted to measure an elevation of the processing head 20 relative to a fixed point, for example the base 80 or the supporting base 41 of the supporting structure 40 and provide a corresponding linear position signal.

The linear position signal can be used to control the movement 54 of the lifting column 42 as a function of a distance with respect to the processing head 20 and the input container 71 and/or output container 72, when the latter is disposed underneath the processing head 20. For example, the linear position signal can be used to control the movement 54 of the lifting column 42 as a function of a distance with respect to the inlet connecting unit 22 and the input container 71 and/or the outlet connecting unit 23 and the output container 72. In one aspect, the lifting sensor 60 is configured to stop the movement 54 of the lifting column 42 when the inlet connecting unit 22 and/or the outlet connecting unit 23 is at a predetermined distance of, respectively, the input container 71 and output container 72.

Alternatively or in addition to the lifting sensor 60, the powder processing apparatus 1 can comprise a rotation sensor 61 configured to measure the rotation angle αᵢ (angular position) of the processing head 20. An angular position signal generated by the rotation sensor 61 can be used to limit the rotation angle αᵢ of the processing head 20. The rotation sensor 61 can be further configured to cooperate with a head driving unit driving the processing head 20 in rotation. In the latter configuration, the rotation angle αᵢ of the processing head 20 can be controlled. More particularly, the first and second angular positions α₁, α₂ can be defined in an automated fashion. Moreover, the rotation sensor 61 can be used to define an intermediate angle αᵢ (see Fig. 3a), for example an intermediate angle of 45°, allowing to perform an operation other than a powder processing operation, such as visual inspection or cleaning of the processing head 20.

In an embodiment, the method of using the powder processing apparatus 1 comprises the step of, prior to turning the processing head 20 in the second angular position α₂, controlling the lifting column 42 to move the processing head 20 in a first predetermined position (for example downwards to a predetermined distance between the processing head 20 and the input container 71). The method can further comprise the step of, prior to pivoting the processing head 20 with the attached input container 71 in the first angular position α₁, controlling the lifting column 42 to move the processing head 20 in a second predetermined position (for example upwards). The method can further comprise the step of, prior to connecting an output container 72 to the outlet connecting unit 23, controlling the lifting column 42 to move the processing head 20 in a third predetermined position (for example downwards to a predetermined distance between the processing head 20 and the output container 72).

The steps of pivoting the processing head 20 and of controlling the lifting column 42 can be performed in combination, in a coordinated fashion.

In some aspects, the fixation device 50 can comprise a "foolproof" device configured to only allow fixing to the driving unit 30 processing heads 20 that are suitable for the rotation by the pivoting element 51. The foolproof device can comprise a foolproof notch (not shown) provided on the fixation device 50 and/or on the processing head 20.

In one aspect, the supporting base 41 can be configured with an asymmetrical design preventing a collision between the container 71, 72 and the supporting structure 40 during the rotation of the processing head 20.

In an embodiment, a computer program comprising instructions for implementing the method comprising the steps of: pivoting the processing head 20 in the second angular position α₂; connecting an input container 71 to the inlet connecting unit 22; pivoting the processing head 20 with the attached input container 71 in the first angular position α₁; connecting an output container 72 to the outlet connecting unit 23; and performing the powder processing operation. During (or after) the step of performing the powder processing operation, the processed material can be transferred from the processing head 20 to the output container 72.

In one aspect, the steps of: connecting an input container 71 to the inlet connecting unit 22; and connecting an output container 72 to the outlet connecting unit 23 can be performed manually.

In an embodiment, the computer program can be further configured to executing any one alone or in combination, of the steps: prior to turning the processing head 20 in the second angular position α₂, controlling the lifting column 42 to move the driving unit 30 in a first predetermined position; prior to pivoting the processing head 20 with the attached input container 71 in the first angular position α₁, controlling the lifting column 42 to move the driving unit 30 in a second predetermined position; and prior to connecting an output container 72 to the outlet connecting unit 23, controlling the lifting column 42 to move the driving unit 30 in a third predetermined position.

The computer program can be further configured to include a step of entering by a user of information parameters, such as the dimensions (such as height and diameter) of the input container 71 and/or output container 72.

### List of reference numerals

- 1: powder processing apparatus
- 20: processing head
- 21: processing chamber
- 22: inlet connecting unit
- 23: outlet connecting unit
- 24: rotor assembly
- 25: blade
- 26: rotor axis
- 27: sieve assembly
- 30: driving unit
- 40: supporting structure
- 41: supporting base
- 42: lifting column
- 50: fixation device
- 51: pivoting element
- 52: pivoting axis
- 53: vertical direction
- 54: movement of the lifting column
- 60: lifting sensor
- 61: rotation sensor
- 71: input container
- 72: output container
- 80: base
- 90: connecting device
- 91: connecting plate
- 92: spring-loaded shaft
- 93: bushing
- 100: container supporting device
- 101: column
- 102: supporting arm
- αᵢ: rotation angle
- α₁: first angular position
- α₂: second angular position

## Claims

1. A powder processing apparatus (1) for performing a powder processing operation, comprising a processing head (20) configured to process a material and to be removably and functionally fixed to a driving unit (30) via a fixation device (50) extending between the driving unit (30) and the processing head (20), the processing head (20) being at a distance from a base (80) when connected to the driving unit (30);
the processing head (20) comprising an inlet connecting unit (22) configured to be connected to an input container (71) containing the material to be processed, and an outlet connecting unit (23) configured to be connected to an output container (72) destined to receive the processed material;
**characterized in that**
the fixation device (50) comprises a pivoting element (51) configured to rotate the processing head (20) around a pivoting axis (52) by a rotation angle (αᵢ) between a first angular position (α₁) where the material contained in the input container (71) can be inputted in the processing head (20) and where the processed material can be outputted in the output container (72), and a second angular position (α₂) where the input container (71) being on the base (80) can be connected to the inlet connecting unit (22).

2. Apparatus according to claim 1,
comprising a head driving unit configured to drive the pivoting element (51) in rotation.

3. Apparatus according to claim 1 or 2,
wherein the rotation angle (αᵢ) is at least 160° or at least 180°, preferably wherein the first angular position (α₁) is 0° and the second angular position (α₂) is 180°, relative to a vertical direction (53) substantially perpendicular to the pivoting axis (52).

4. Apparatus according to any one of claims 1 to 3,
wherein the pivoting element (51) and/or the processing head (20) comprises a foolproof device configured to allow fixing processing heads that are suitable for the rotation by the pivoting element (51).

5. Apparatus according to any one of claims 1 to 4,
comprising a rotation sensor (61) configured to measure the rotation angle (αᵢ) of the processing head (20).

6. Apparatus according to any one of claims 1 to 5,
comprising a supporting structure (40) including a lifting column (42) configured to control a movement (54) of the driving unit (30) along a vertical direction (53) substantially perpendicular to the pivoting axis (52).

7. Apparatus according to claim 6,
comprising a lifting sensor (60) configured to provide a linear position signal associated with the movement (54) of the lifting column (42).

8. Apparatus according to any one of claims 1 to 7,
configured to control the pivoting of the processing head (20) and the movement (54) of the lifting column (42) in a coordinated fashion.

9. Apparatus according to any one of claims 1 to 8,
comprising a connecting device (90) configured to connect the input container (71) to the inlet connecting unit (22) and/or the output container (72) to the outlet connecting unit (23) in a secured fashion without requiring a locking connection.

10. Apparatus according to any one of claims 1 to 9,
comprises a container supporting device (100) configured to support the input and/or output container (71, 72) laterally relative to the processing head (20).

11. Method of using the powder processing apparatus (1) according to any one of claims 1 to 10, comprising:
pivoting the processing head (20) in the second angular position (α₂);
connecting an input container (71) to the inlet connecting unit (22);
pivoting the processing head (20) with the attached input container (71) in the first angular position (α₁);
connecting an output container (72) to the outlet connecting unit (23); and
performing the powder processing operation and transferring the processed material from the processing head (20) to the output container (72).

12. Method according to claim 11,
wherein the apparatus comprises a supporting structure (40) including a lifting column (42) configured to control a movement (54) of the driving unit (30) along a vertical direction (53) substantially perpendicular to the pivoting axis (52);
the method further comprising: prior to turning the processing head (20) in the second angular position (α₂), controlling the lifting column (42) to move the processing head (20) in a first predetermined position;
prior to pivoting the processing head (20) with the attached input container (71) in the first angular position (α₁), controlling the lifting column (42) to move the processing head (20) in a second predetermined position.

13. Method according to claim 12,
further comprising prior to connecting an output container (72) to the outlet connecting unit (23), controlling the lifting column (42) to move the processing head (20) in a third predetermined position.

14. Method according to any one of claims 11 to 13,
wherein the steps of pivoting the processing head (20) and of controlling the lifting column (42) are performed in combination.

15. Computer program comprising instructions to cause the device of any of claims 1-10 to carry out the method according to any one of claims 11 to 14.

## Patentansprüche

1. Pulververarbeitungsvorrichtung (1) zur Durchführung eines Pulververarbeitungsvorgangs, umfassend einen Verarbeitungskopf (20), welcher zur Verarbeitung eines Materials konfiguriert ist und über eine zwischen der Antriebseinheit (30) und dem Verarbeitungskopf (20) verlaufende Fixiervorrichtung (50) abnehmbar und funktional mit einer Antriebseinheit (30) verbunden werden kann, wobei sich der Verarbeitungskopf (20) in einem Abstand von einer Basis (80) befindet, wenn er mit der Antriebseinheit (30) verbunden ist;
wobei der Verarbeitungskopf (20) eine Einlassverbindungseinheit (22) umfasst, welche zur Verbindung mit einem Einlassbehälter (71) konfiguriert ist, welcher das zu verarbeitende Material enthält, sowie eine Auslassverbindungseinheit (23), welche zur Verbindung mit einem Auslassbehälter (72) konfiguriert ist, welcher zur Aufnahme des verarbeiteten Materials bestimmt ist;
**dadurch gekennzeichnet, dass**
die Fixiervorrichtung (50) ein Schwenkelement (51) umfasst, welches dazu konfiguriert ist, den Verarbeitungskopf (20) zu drehen um eine Schwenkachse (52) um einen Drehwinkel (αᵢ) zwischen einer ersten Winkelposition (α₁), in welcher das im Einlassbehälter (71) enthaltene Material in den Verarbeitungskopf (20) eingeführt werden kann und in welcher das verarbeitete Material in den Auslassbehälter (72) ausgegeben werden kann, und einer zweiten Winkelposition (α₂), in welcher der auf der Basis (80) befindliche Einlassbehälter (71) mit der Einlassverbindungseinheit (22) verbunden werden kann.

2. Vorrichtung gemäss Anspruch 1, umfassend eine Kopfantriebseinheit, welche derart konfiguriert ist, um das Schwenkelement (51) in Drehung zu versetzen.

3. Vorrichtung gemäss Anspruch 1 oder 2, worin der Drehwinkel (αᵢ) mindestens 160° oder mindestens 180° beträgt, vorzugsweise worin die erste Winkelposition (α₁) 0° und die zweite Winkelposition (α₂) 180° beträgt, in Bezug auf eine vertikale Richtung (53), welche im Wesentlichen senkrecht zur Schwenkachse (52) verläuft.

4. Vorrichtung gemäss irgendeinem der Ansprüche 1 bis 3, worin das Schwenkelement (51) und/oder der Bearbeitungskopf (20) eine ausfallsichere Vorrichtung umfasst, welche zur Befestigung von Bearbeitungsköpfen konfiguriert ist, die für die Drehung durch das Schwenkelement (51) geeignet sind.

5. Vorrichtung gemäss irgendeinem der Ansprüche 1 bis 4, umfassend einen Drehsensor (61), welcher für die Messung des Drehwinkels (αᵢ) des Bearbeitungskopfes (20) konfiguriert ist.

6. Vorrichtung gemäss irgendeinem der Ansprüche 1 bis 5, umfassend eine Tragkonstruktion (40) mit einer Hubsäule (42), welche zur Steuerung einer Bewegung (54) der Antriebseinheit (30) in einer vertikalen Richtung (53) konfiguriert ist, die im Wesentlichen senkrecht zur Schwenkachse (52) steht.

7. Vorrichtung gemäss Anspruch 6, umfassend einen Hubsensor (60), welcher zur Lieferung eines linearen Positionssignals konfiguriert ist, das mit der Bewegung (54) der Hubsäule (42) verbunden ist.

8. Vorrichtung gemäss irgendeinem der Ansprüche 1 bis 7, konfiguriert zur koordinierten Steuerung des Schwenkens des Bearbeitungskopfes (20) und der Bewegung (54) der Hubsäule (42).

9. Vorrichtung gemäss irgendeinem der Ansprüche 1 bis 8, umfassend eine Verbindungsvorrichtung (90), welche zur sicheren Verbindung des Einlassbehälters (71) mit der Einlassverbindungseinheit (22) und/oder des Auslassbehälters (72) mit der Auslassverbindungseinheit (23) konfiguriert ist, ohne dass eine Verriegelungsverbindung erforderlich ist.

10. Vorrichtung gemäss irgendeinem der Ansprüche 1 bis 9, umfassend eine Behälterhalterung (100), welche zur Stützung des Einlass- und/oder Auslassbehälters (71, 72) seitlich in Bezug auf den Verarbeitungskopf (20) konfiguriert ist.

11. Verfahren der Verwendung der Pulververarbeitungsvorrichtung (1) gemäss irgendeinem der Ansprüche 1 bis 10, umfassend:
Schwenken des Verarbeitungskopfes (20) in die zweite Winkelposition (α₂);
Verbinden eines Einlassbehälters (71) mit der Einlassverbindungseinheit (22);
Schwenken des Verarbeitungskopfes (20) mit dem daran befestigten Einlassbehälter (71) in die erste Winkelposition (α₁);
Verbinden eines Auslassbehälters (72) mit der Auslassverbindungseinheit (23); und
Durchführung des Pulververarbeitungsvorgangs und Überführung des verarbeiteten Materials vom Verarbeitungskopf (20) in den Auslassbehälter (72).

12. Verfahren gemäss Anspruch 11,
worin die Vorrichtung eine Tragstruktur (40) mit einer Hubsäule (42) umfasst, welche zur Steuerung einer Bewegung (54) der Antriebseinheit (30) in vertikaler Richtung (53) im Wesentlichen senkrecht zur Schwenkachse (52) konfiguriert ist;
wobei das Verfahren ferner umfasst: Vor dem Drehen des Bearbeitungskopfes (20) in die zweite Winkelposition (α₂), das Steuern der Hubsäule (42) zum Bewegen des Bearbeitungskopfes (20) in eine erste vorbestimmte Position;
vor dem Schwenken des Bearbeitungskopfes (20) mit dem daran befestigten Einlassbehälter (71) in die erste Winkelposition (α₁), das Steuern der Hubsäule (42) zum Bewegen des Bearbeitungskopfes (20) in eine zweite vorbestimmte Position.

13. Verfahren gemäss Anspruch 12, ferner umfassend: Vor dem Verbinden eines Auslassbehälters (72) mit der Auslassverbindungseinheit (23), das Steuern der Hubsäule (42) zum Bewegen des Verarbeitungskopfes (20) in eine dritte vorbestimmte Position.

14. Verfahren gemäss irgendeinem der Ansprüche 11 bis 13, worin die Schritte des Schwenkens des Bearbeitungskopfes (20) und des Steuerns der Hubsäule (42) in Kombination durchgeführt werden.

15. Computerprogramm mit Anweisungen, die das Gerät gemäss einem der Ansprüche 1 bis 10 dazu veranlassen, das Verfahren gemäss einem der Ansprüche 11 bis 14 auszuführen.

## Revendications

1. Appareil de traitement de poudre (1) destiné à effectuer une opération de traitement de poudre, comprenant une tête de traitement (20) configurée pour traiter un matériau et pour être fixée de manière amovible et fonctionnelle à une unité d'entraînement (30) via un dispositif de fixation (50) s'étendant entre l'unité d'entraînement (30) et la tête de traitement (20), la tête de traitement (20) étant à distance d'une base (80) lorsqu'elle est connectée à l'unité d'entraînement (30) ;
la tête de traitement (20) comprenant une unité de raccordement d'entrée (22) configurée pour être raccordée à un récipient d'entrée (71) contenant le matériau à traiter, et une unité de raccordement de sortie (23) configurée pour être raccordée à un récipient de sortie (72) destiné à recevoir le matériau traité ;
**caractérisé en ce que**
le dispositif de fixation (50) comprend un élément pivotant (51) configuré pour faire tourner la tête de traitement (20) autour d'un axe de pivotement (52) d'un angle de rotation (αᵢ) entre une première position angulaire (α₁) où le matériau contenu dans le récipient d'entrée (71) peut être introduit dans la tête de traitement (20) et où le matériau traité peut être évacué dans le récipient de sortie (72), et une deuxième position angulaire (α₂) où le récipient d'entrée (71) se trouvant sur la base (80) peut être connecté à l'unité de connexion d'entrée (22).

2. Appareil selon la revendication 1,
comprenant une unité d'entraînement de tête configurée pour entraîner l'élément pivotant (51) en rotation.

3. Appareil selon la revendication 1 ou 2,
dans lequel l'angle de rotation (αᵢ) est d'au moins 160° ou d'au moins 180°, de préférence dans lequel la première position angulaire (α₁) est de 0° et la deuxième position angulaire (α₂) est de 180°, par rapport à une direction verticale (53) sensiblement perpendiculaire à l'axe de pivotement (52).

4. Appareil selon l'une quelconque des revendications 1 à 3,
dans lequel l'élément pivotant (51) et/ou la tête de traitement (20) comprend un dispositif infaillible configuré pour permettre la fixation de têtes de traitement adaptées à la rotation par l'élément pivotant (51).

5. Appareil selon l'une quelconque des revendications 1 à 4,
comprenant un capteur de rotation (61) configuré pour mesurer l'angle de rotation (αᵢ) de la tête de traitement (20).

6. Appareil selon l'une quelconque des revendications 1 à 5,
comprenant une structure de support (40) comprenant une colonne de levage (42) configurée pour contrôler un mouvement (54) de l'unité d'entraînement (30) le long d'une direction verticale (53) sensiblement perpendiculaire à l'axe de pivotement (52).

7. Appareil selon la revendication 6,
comprenant un capteur de levage (60) configuré pour fournir un signal de position linéaire associé au mouvement (54) de la colonne de levage (42).

8. Appareil selon l'une quelconque des revendications 1 à 7,
configuré pour contrôler le pivotement de la tête de traitement (20) et le mouvement (54) de la colonne de levage (42) de manière coordonnée.

9. Appareil selon l'une quelconque des revendications 1 à 8,
comprenant un dispositif de connexion (90) configuré pour connecter le récipient d'entrée (71) à l'unité de connexion d'entrée (22) et/ou le récipient de sortie (72) à l'unité de raccordement de sortie (23) de manière sécurisée sans nécessiter de connexion verrouillable.

10. Appareil selon l'une quelconque des revendications 1 à 9,
comprenant un dispositif de support de récipient (100) configuré pour supporter le récipient d'entrée et/ou de sortie (71, 72) latéralement par rapport à la tête de traitement (20).

11. Procédé d'utilisation de l'appareil de traitement de poudre (1) selon l'une quelconque des revendications 1 à 10, comprenant :
faire pivoter la tête de traitement (20) dans la deuxième position angulaire (α₂) ;
raccorder un récipient d'entrée (71) à l'unité de raccordement d'entrée (22) ;
faire pivoter la tête de traitement (20) avec le récipient d'entrée (71) fixé dans la première position angulaire (α₁) ;
raccorder un récipient de sortie (72) à l'unité de raccordement de sortie (23) ; et
effectuer l'opération de traitement de la poudre et transférer le matériau traité de la tête de traitement (20) vers le récipient de sortie (72).

12. Procédé selon la revendication 11,
dans lequel l'appareil comprend une structure de support (40) comprenant une colonne de levage (42) configurée pour contrôler un mouvement (54) de l'unité d'entraînement (30) le long d'une direction verticale (53) sensiblement perpendiculaire à l'axe de pivotement (52) ;
le procédé comprenant en outre : avant de tourner la tête de traitement (20) dans la deuxième position angulaire (α₂), le contrôle de la colonne de levage (42) pour déplacer la tête de traitement (20) dans une première position prédéterminée ;
avant de faire pivoter la tête de traitement (20) avec le récipient d'entrée (71) fixé dans la première position angulaire (α₁), commander la colonne de levage (42) pour déplacer la tête de traitement (20) dans une deuxième position prédéterminée.

13. Procédé selon la revendication 12,
comprenant en outre avant de connecter un récipient de sortie (72) à l'unité de raccordement de sortie (23), le contrôle de la colonne de levage (42) pour déplacer la tête de traitement (20) dans une troisième position prédéterminée.

14. Procédé selon l'une quelconque des revendications 11 à 13,
dans lequel les étapes consistant à faire pivoter la tête de traitement (20) et à commander la colonne de levage (42) sont effectuées en combinaison.

15. Programme informatique comprenant des instructions pour amener le dispositif de l'une quelconque des revendications 1 à 10 à mettre en œuvre le procédé selon l'une quelconque des revendications 11 à 14.
